# EUROPEAN PATENT SPECIFICATION

(11) **EP 0 530 945 B1**
(45) Date of publication and mention of the grant of the patent: **27.12.1996**
(21) Application number: 92304029.9
(22) Date of filing: 05.05.1992
(51) Int. Cl.: A62C 4/00, F16K 17/16, F17C 13/12

(54) **Flash gas venting and flame arresting apparatus**
Explosionsentlastung und Flammensperre
Appareil de décharge d'explosions et dispositif anti-retour de flamme

(30) Priority: 24.06.1991 US 719516
(43) Date of publication of application: 10.03.1993
(73) Proprietor: BS & B SAFETY SYSTEMS, INC., Tulsa OK 74147-0590 (US)
(72) Inventor: Fritts, Donald K., Broken Arrow, Oklahoma 74014 (US)
(74) Representative: Allen, William Guy Fairfax

(56) References cited:
- DE-A- 2 263 956
- DE-B- 1 011 689
- DE-B- 1 203 686
- DE-C- 942 916
- US-A- 1 686 918
- US-A- 1 697 199
- US-A- 2 220 720

## Description

The present invention relates to apparatus for venting flash gas from a vessel or system and arresting the flame associated therewith.

In a variety of industrial applications, vessels and/or systems containing combustible fluids which are susceptible to spontaneous ignition are utilized. For example, vessels or systems containing air under pressure which are susceptible by hydrocarbon contamination and spontaneous ignition are common. Generally, vessels and conduit systems downstream of air compressors slowly accumulate oil therein in spite of oil filters and other safeguards being used. When the air-hydrocarbon ratio reaches a certain level, spontaneous combustion can take place which produces a flame front and the generation of hot flash gas. As a result, the pressure within the vessel or system dramatically increases causing rupture, explosions and/or other damage. The ignition of hydrocarbon-air mixtures can be spontaneous, or it can be caused by overheating of equipment parts, whereby the combustible mixture is exposed to high temperatures.

While numerous safety shut-down devices have been developed and utilized for preventing this problem, such devices are subject to failure and/or being bypassed by operating personnel and flash gas explosions and damage have still taken place.

DE-C-942916 discloses a flash gas venting and flame arresting apparatus for preventing damage to a closed vessel or system by flash gas formed therein, said vessel or system having an outlet connection attached thereto, said apparatus comprising a pressure responsive valve connected to said outlet connection for relieving pressure exerted thereon from within said vessel or system as a result of the presence of flash gas therein and for venting said flash gas from said vessel or system; and a flame arresting receptacle connected to said valve external of said vessel or system, for receiving said flash gas and for arresting flame associated therewith prior to releasing said flash gas, said receptacle including an elongate housing having an inlet end connected to said valve and sides having a plurality of flash gas exit ports therein.

The present invention is characterised in that said elongate housing has a closed opposite end of internally concave shape for changing the direction of flow of flash gas which impinges thereon, and in that the cross-section of said housing progressively increases as the distance from the inlet end increases.

Such an apparatus can be utilized with a vessel or system which is subject to the formation and/or the ignition of a combustible gas therein whereby in the event such a gas forms and/or ignites, the flash gas generated and flame associated therewith are vented from the vessel or system, the flame is arrested and the risk of injury to personnel and equipment is minimized.

The apparatus, when installed on a vessel or system, prevents damage to the vessel or system as a result of flash gas formed therein by venting the flash gas and arresting the flame associated therewith.

In order that the present invention may more readily be understood, the following description is given, merely by way of example, reference being made to the accompanying drawings in which:-
Figure 1 is a side elevation of one embodiment of apparatus of the present invention installed on a conduit;
Figure 2 is a cross-sectional view taken along line 2-2 of Figure 1;
Figure 3 is a cross-sectional view taken along line 3-3 of Figure 2;
Figure 4 is a cross-sectional view taken along line 4-4 of Figure 2;
Figure 5 is a cross-sectional view taken along line 5-5 of Figure 1; and
Figure 6 is a cross-sectional view similar to Figure 5, but showing the flow of flash gas through the apparatus after rupture of the rupture member thereof.

The term "flash gas" is utilized herein to mean the burning and expanding gases developed within a closed vessel or system as a result of a combustible gas or gas mixture contained therein being ignited spontaneously or as a result of the generation of heat, sparks or the like within the vessel or system. Generally, the flash gas is preceded by a flame front which rapidly moves through the vessel or system as the pressure and temperature therein are increased dramatically.

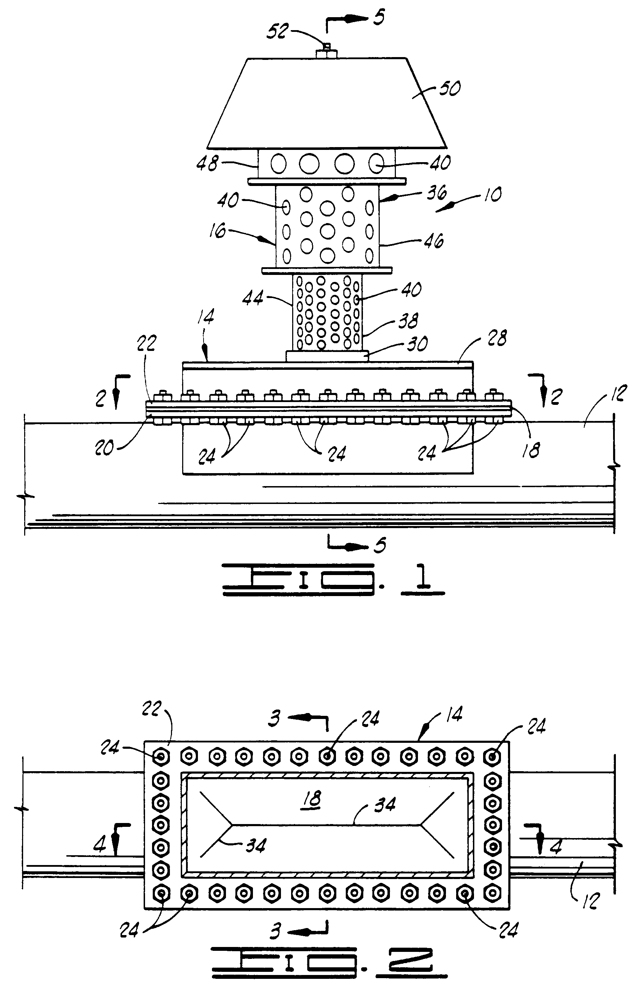

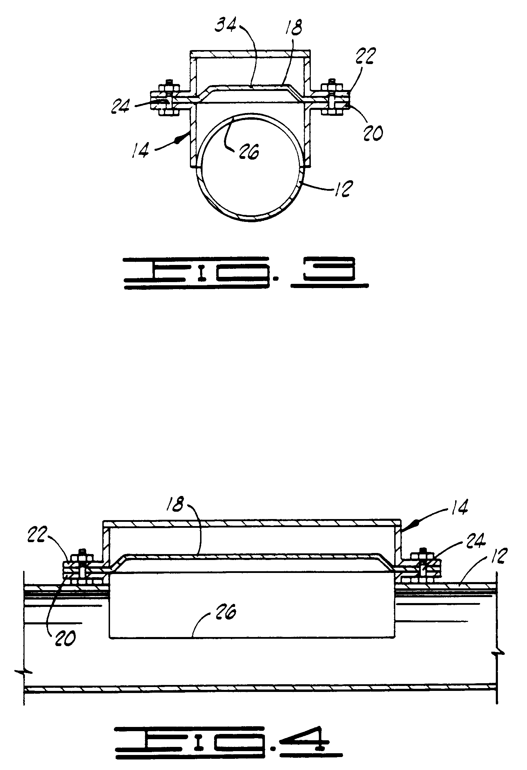

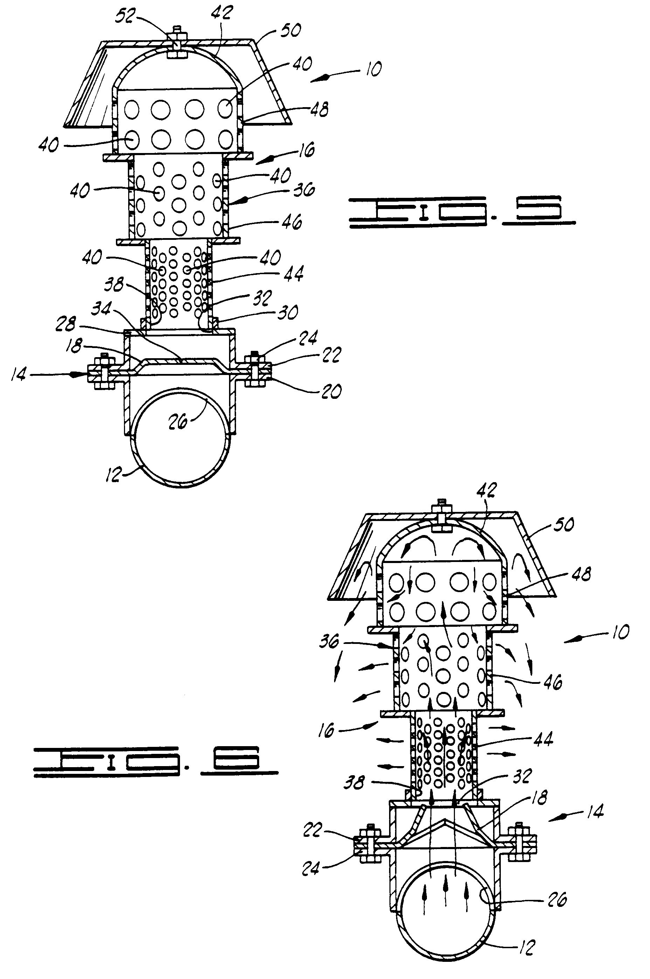

Referring now to Figures 1-5, the apparatus 10 is connected to a conduit 12 which is part of a closed system having the potential of containing an air-hydrocarbon or other combustible mixture or substance capable of being ignited and forming flash gas. For example, the conduit 12 can be a part of a conduit system downstream of an air compressor which is subject to containing a spontaneously ignitable air-hydrocarbon mixture.

The apparatus 10 comprises a pressure responsive valve 14, which is sealingly connected to an opening in the conduit 12 and a flame arresting receptacle 16, which is connected to the valve 14.

The valve 14 can take various forms e.g., a pressure operated spring loaded relief valve, a motor valve operated by a pneumatic or electric pressure controller or other valve apparatus. Preferably, the valve 14 is a rupturable member which ruptures when a predetermined pressure differential is exerted thereon clamped between a pair of supporting flange members as illustrated in the drawings. That is, as best shown in Figures 2-4, the valve 14 comprises a rupturable member 18 sealingly clamped between inlet and outlet flanges 20 and 22, respectively. In the form illustrated, the flanges 20 and 22 and the rupturable member 18 include pluralities of complementary openings formed therein, and the rupturable member and flanges are clamped together by a plurality of bolts 24 which extend through the openings. The inlet flange 20 is sealingly attached, such as by welding, over an opening 26 in the conduit 12. The flange 22 is closed by top plate 28 attached thereto such as by welding, and a cylindrical collar 30 is welded to the plate 28 over an opening 32 (Figure 5) formed therein.

In the form illustrated, the rupturable member 18 is a relatively thin rectangular rupture panel having scores (grooves) 34 formed thereon which create lines of weakness therein. When a predetermined pressure differential is exerted on the rupture panel 18, the panel ruptures along the lines of weakness formed by the scores 34 and opens as illustrated in Figure 6. The rupture panel 18 can take any of a variety of known designs. Also, in lieu of the rupture panel 18, the rupturable member of the valve 14 can be a rupture disk of any of the various known designs. Rupture disks are often circular, and when used in the valve 14, circular flanges are substituted for the rectangular flanges 20 and 22.

The flame arresting receptacle 16 includes an elongated housing 36, the inlet end 38 of which is connected to the collar 30 of the outlet flange 22. As best shown in Figures 1 and 5, the elongated housing 36 is preferably cylindrical and includes a plurality of flash gas exit ports 40 in the sides thereof. The end of the housing 36 opposite the inlet end 38 is closed, preferably by a curved closure member 42, e.g., an elliptical head, whereby the direction of flow of flash gas which impinges on the closure member 42 is reversed within the housing 36.

The gas exit ports 40 disposed in the dies of the elongated housing 36 preferably increase in cross-sectional area as the distance of the ports from the inlet end 38 of the housing 36 increases. Also, as shown in Figures 1 and 5, the internal diameter of the housing 36 preferably increases as the distance from the inlet end 38 thereof increases. In a presently preferred arrangement, the housing 36 is formed of three cylindrical sections 44, 46 and 48, the first section 44 which is connected to the outlet flange member 22 is of the smallest diameter and includes the smallest size of ports 40. The second or intermediate section 46 has a larger diameter than the first section 44, and is connected thereto and includes larger ports 40. The section 48 is connected to the section 46, is of the largest diameter, includes the largest ports 40 and is closed by the closure member 42.

The baffle 50 is attached to the closure member 42 of the housing 36 by a bolt 52 or other equivalent means. The baffle 50 is preferably of truncated conical shape, and as will be described further hereinbelow, functions to change the direction of flash gas exiting the housing 36 by way of the ports 40 thereof.

In operation of the apparatus 10, when combustible gas flowing through the conduit 12 ignites spontaneously or otherwise, the expansion of the flash gas produced and the flame front moving through the conduit 12 cause the pressure exerted within the conduit 12 to be increased whereby the rupture panel 18 ruptures, as shown in Figure 6, tearing along the lines of weakness created by the scores 34 and opens fully, generally without fragmentation. This causes the flame front and flash gas to exit the conduit 12 by way of the opening 32 at a relatively high velocity through the opening 32 and through the flame arresting receptacle 16 by way of the elongated housing 36 to the opposite end of the housing 36, where it impinges on the closure member 42 of the housing and reverses direction. Some of the flash gas exits the housing 36 by way of the ports 40 in the sides of the housing 36 as it flows towards the closed end of the housing 36, but a major portion of the flash gas flows through the housing 36 and reverses direction prior to exiting the housing 36. This is largely due to the increasing internal diameter of the housing 36 as the distance from the inlet end 38 increases in combination with the ports 40 being of small size at the inlet end of the housing 36 and of increasing size as the distance from the inlet end increases. The flow direction reversal of the flash gas coupled with the passage of the flash gas through the ports 40 causes flame associated with the flash gas to be arrested.

The baffle 50 functions to change the direction of flash gas which exits the enlarged ports 40 in the cylindrical section 48 of the housing 36 thereby to extinguish any flame carried outside of the housing 36. After exiting the ports 40 the flash gas is released to the atmosphere or into an enlarged container within which the apparatus 10 is disposed.

Thus, the apparatus 10 functions to vent flash gas and flame associated therewith from a vessel, conduit or other pressure system and to arrest the flame associated with the flash gas prior to releasing the flash gas to the atmosphere or other location. The apparatus 10 thereby prevents explosions and injury to equipment and personnel while safely venting an arresting flame associated with the flash gas.

## Claims

1. A flash gas venting and flame arresting apparatus for preventing damage to a closed vessel or system by flash gas formed therein, said vessel or system having an outlet connection (12) attached thereto, said apparatus comprising a pressure responsive valve (14) connected to said outlet connection (12) for relieving pressure exerted thereon from within said vessel or system as a result of the presence of flash gas therein and for venting said flash gas from said vessel or system; and a flame arresting receptacle (16) connected to said valve (14) external of said vessel or system, for receiving said flash gas and for arresting flame associated therewith prior to releasing said flash gas, said receptacle (16) including an elongate housing (36) having an inlet end (38) connected to said valve (14) and sides (44,46,48) having a plurality of flash gas exit ports (40) therein, characterised in that said elongate housing (36) has a closed opposite end (42) of internally concave shape for changing the direction of flow of flash gas which impinges thereon, and in that the cross-section of said housing progressively increases as the distance from the inlet end increases.

2. Apparatus according to claim 1, characterised in that said ports (40) in the sides of said elongate housing (36) are of generally increasing size as the distance thereof from the inlet end of said housing increases.

3. Apparatus according to claim 1 or 2, characterised in that said elongate housing of said flame arresting receptacle is substantially cylindrical in shape.

4. Apparatus according to claim 3, characterised in that said elongate housing (36) comprises three successively connected cylindrical sections (44,46,48), the first section (44) being connected to the valve (8), the second section (46) being of a larger diameter than the first section and the third section being of a larger diameter than the second section.

5. Apparatus according to claim 4, characterised in that said first cylindrical section (44) contains a plurality of flash gas exit ports (40) therein, the second section (46) contains a plurality of flash gas exit ports (40) therein of a larger size than the ports in said first section and the third section contains a plurality of flash gas exit ports therein of a larger size than the ports in said second section.

6. Apparatus according to claim 4 or 5, characterised in that said third cylindrical section is closed by an elliptical head (42) attached thereto.

7. Apparatus according to any preceding claim, characterised in that said flame arresting housing (36) includes a baffle (50) attached thereto for changing the direction of flow of flash gas exiting said flash gas exit ports of said housing.

8. Apparatus according to claim 7, characterised in that said baffle (50) comprises a truncated cone externally connected to and extending over and around the closed end portion (42) of said housing.

9. Apparatus according to any preceding claim, characterised in that said pressure responsive valve (14) comprises a rupturable member, such as a rupture disk or panel (18) which ruptures when a predetermined pressure differential is exerted thereon clamped between inlet and outlet flanges (20,22), connected to the outlet connection (12) and the elongate housing (36) respectively.

## Patentansprüche

1. Explosionsentlastungs- und Flammensperrvorrichtung zum Verhindern einer Beschädigung eines geschlossenen Kessels oder Systems durch darin gebildetes Explosionsgas, welcher Kessel oder welches System einen daran angebrachten Auslaßanschluß (12) hat, wobei die Vorrichtung ein druckabhängiges Ventil (14), das zum Entlasten von darauf von innerhalb des Kessels oder Systems als eine Folge des Vorhandenseins von Explosionsgas darin ausgeübtem Druck und zum Auslassen des Explosionsgases aus dem Kessel oder System mit dem Auslaßanschluß (12) verbunden ist, und einen Flammenaufnahmebehälter (16) enthält, der außerhalb des Kessels oder Systems mit dem Ventil (14) verbunden ist, um das Explosionsgas aufzunehmen und die damit verbundene Flamme zu hemmen, bevor das Explosionsgas freigelassen wird, welcher Behälter (16) ein längliches Gehäuse (36) enthält, das ein Einlaßende (38), das mit dem Ventil (14) verbunden ist, und Seiten (44, 46, 48) hat, die eine Mehrzahl von Explosionsgas-Auslaßöffnungen (40) darin aufweisen,
dadurch gekennzeichnet,
daß das längliche Gehäuse (36) ein geschlossenes entgegengesetztes Ende (42) von intern konkaver Form zum Ändern der Strömungsrichtung von Explosionsgas hat, das darauf trifft, und daß der Querschnitt des Gehäuses mit zunehmendem Abstand vom Einlaßende progressiv zunimmt.

2. Vorrichtung nach Anspruch 1,
dadurch gekennzeichnet,
daß die Öffnungen (40) in den Seiten des länglichen Gehäuses (36) von allgemein mit ihrem zunehmenden Abstand vom Einlaßende des Gehäuses zunehmender Größe sind.

3. Vorrichtung nach Anspruch 1 oder 2,
dadurch gekennzeichnet,
daß das längliche Gehäuse des Flammenaufnahmebehälters von im wesentlichen zylindrischer Form ist.

4. Vorrichtung nach Anspruch 3,
dadurch gekennzeichnet,
daß das längliche Gehäuse (36) drei aufeinanderfolgend verbundene zylindrische Abschnitte (44, 46, 48) enthält, wobei der erste Abschnitt (44) mit dem Ventil (8) verbunden ist, der zweite Abschnitt (46) von größerem Durchmesser als der erste Abschnitt ist, und der dritte Abschnitt von größerem Durchmesser als der zweite Abschnitt ist.

5. Vorrichtung nach Anspruch 4,
dadurch gekennzeichnet,
daß der erste zylindrische Abschnitt (44) eine Mehrzahl von Explosionsgas-Auslaßöffnungen (40) darin enthält, der zweite Abschnitt (46) darin eine Mehrzahl von Explosionsgas-Auslaßöffnungen (40) von einer größeren Größe als die Öffnungen in dem ersten Abschnitt enthält, und der dritte Abschnitt darin eine Mehrzahl von Explosionsgas-Auslaßöffnungen von einer größeren Größe als die Öffnungen in dem zweiten Abschnitt enthält.

6. Vorrichtung nach Anspruch 4 oder 5,
dadurch gekennzeichnet,
daß der dritte zylindrische Abschnitt durch einen elliptischen Kopf (42) abgeschlossen ist, der daran angebracht ist.

7. Vorrichtung nach einem der vorhergehenden Ansprüche,
dadurch gekennzeichnet,
daß das Flammenaufnahmegehäuse (36) eine Prallfläche (50) enthält, die daran zum Ändern der Strömungsrichtung von Explosionsgas angebracht ist, das die Explosionsgas-Auslaßöffnungen des Gehäuses verläßt.

8. Vorrichtung nach Anspruch 7,
dadurch gekennzeichnet,
daß die Prallfläche (50) einen Kegelstumpf enthält, der extern verbunden ist mit dem und sich erstreckt über und um den geschlossenen Endteil (42) des Gehäuses.

9. Vorrichtung nach einem der vorhergehenden Ansprüche,
dadurch gekennzeichnet,
daß das druckabhängige Ventil (14) ein zwischen Einlaß- und Auslaßflansche (20, 22), die mit dem Auslaßanschluß (12) bzw. dem länglichen Gehäuse (36) verbunden sind, geklemmtes Berstelement enthält, wie eine Berstscheibe oder -platte (18), das birst, wenn eine vorgegebene Druckdifferenz darauf ausgeübt wird.

## Revendications

1. Appareil de décharge d'explosion et dispositif anti-retour de flamme pour empêcher l'endommagement d'une cuve ou autre système fermé par les gaz d'explosion produits à l'intérieur, un raccordement de sortie (12) étant fixé sur ladite cuve ou ledit système, ledit appareil comportant une soupape commandée par la pression (14) reliée audit raccordement de sortie (12) pour décharger la pression transmise à celui-ci de l'intérieur de ladite cuve ou dudit système par suite de la formation de gaz d'explosion à l'intérieur et pour évacuer lesdits gaz d'explosion de ladite cuve ou dudit système ; et un réceptacle de confinement de flamme (16) relié à ladite soupape (14), à l'extérieur de ladite cuve ou dudit système, pour recueillir lesdits gaz d'explosion et pour inhiber la flamme qui leur est associée avant d'évacuer lesdits gaz d'explosion, ledit réceptacle (16) comportant une enveloppe de forme allongée (36) dont l'extrémité d'entrée (38) est raccordée à ladite soupape (14) et dont les parois latérales (44, 46, 48) comportent un ensemble d'orifices d'évacuation des gaz d'explosion 40, caractérisé en ce que l'extrémité opposée fermée (42) de ladite enveloppe de forme allongée (36) a une forme concave dirigée vers l'intérieur pour dévier la trajectoire des gaz d'explosion arrivant sur cette extrémité, et en ce que la section transversale de ladite enveloppe augmente progressivement en s'éloignant de l'extrémité d'entrée.

2. Appareil selon la revendication 1, caractérisé en ce que lesdits orifices (40) des parois latérales de ladite enveloppe de forme allongée (36) ont un diamètre qui augmente essentiellement lorsque la distance qui les sépare de l'extrémité d'entrée de ladite enveloppe augmente.

3. Appareil selon l'une ou l'autre des revendications 1 et 2, caractérisé en ce que ladite enveloppe de forme allongée dudit réceptacle de confinement de flamme a une forme essentiellement cylindrique.

4. Appareil selon la revendication 3, caractérisé en ce que ladite enveloppe de forme allongée (36) comprend trois sections cylindriques (44, 46, 48) raccordées à la suite, la première section (44) étant raccordée à la soupape (8), la deuxième section (46) ayant un diamètre supérieur à celui de la première section, et la troisième section ayant un diamètre supérieur à celui de la deuxième section.

5. Appareil selon la revendication 4, caractérisé en ce que ladite première section cylindrique (44) comporte un ensemble d'orifices de sortie des gaz d'explosion (40), en ce que ladite deuxième section (46) comporte un ensemble d'orifices de sortie des gaz d'explosion (40) de diamètre supérieur à celui des orifices de ladite première section, et en ce que la troisième section comporte un ensemble d'orifices de sortie des gaz d'explosion de diamètre supérieur à celui des orifices de ladite deuxième section.

6. Appareil selon l'une ou l'autre des revendications 4 et 5, caractérisé en ce que ladite troisième section cylindrique est fermée par une tête elliptique (42) fixée sur celle-ci.

7. Appareil selon l'une quelconque des revendications précédentes, caractérisé en ce que ladite enveloppe de confinement de flamme (36) comporte un déflecteur (50) fixé sur celle-ci pour modifier la direction d'écoulement des gaz d'explosion sortant par lesdits orifices de sortie des gaz d'explosion de ladite enveloppe.

8. Appareil selon la revendication 7, caractérisé en ce que ledit déflecteur (50) comprend un tronc de cône raccordé extérieurement à - en recouvrant et en entourant - la partie terminale fermée (42) de ladite enveloppe.

9. Appareil selon l'une quelconque des revendications précédentes, caractérisé en ce que ladite soupape commandée par la pression (14) comporte un élément de rupture, du type disque ou plaque de rupture (18) qui se déchire lorsqu'un différentiel de pression déterminé s'exerce sur lui, et qui est serré entre des brides d'entrée et de sortie (20, 22), reliées respectivement au raccordement de sortie (12) et à l'enveloppe de forme allongée (36).
